# EUROPÄISCHE PATENTANMELDUNG

(11) **EP 1 637 412 A1**
(43) Veröffentlichungstag der Anmeldung: **22.03.2006**
(21) Anmeldenummer: 05020338.9
(22) Anmeldetag: 19.09.2005
(51) Int. Cl.: B60R 22/14, A47G 9/10

(54) **Nackenpolster**

(30) Priorität: 17.09.2004 DE 102004045596
(71) Anmelder: Concord GmbH, 95346 Stadtsteinach (DE)
(72) Erfinder: Heer, Carola, 95463 Bindlach (DE)
(74) Vertreter: Hebing, Norbert

(57) **Zusammenfassung**

Die Erfindung sieht ein Nackenpolster (1) bestehend aus einer Nackenrolle (7) und einem Gurtpolster (5) vor, der am Schultergurt (2) eines Dreipunktgurtes (2) befestigt werden kann.

Dadurch wird das Nackenpolster am Gurt (2) gehalten und verbleibt damit stets unverrückbar am Hals der mit dem Dreipunktgurt angeschnallten Person in Position.

## Beschreibung

Die Erfindung bezieht sich auf ein Nackenpolster. Derartige Polster werden vor allem verwendet, um ein Schlafen in sitzender Position zu ermöglichen. Das Nackenpolster wird halbkreisförmig um den Nacken einer Person gelegt, wobei das Polster über die Schultern reicht, so dass der Kopf auch seitlich abgestützt wird.

In Fahrzeugen sind sowohl der Beifahrersitz als auch zum Teil die Rücksitze mit sogenannten Dreipunktgurten versehen, wobei ein Schultergurt über die Schulter der im Sitz sitzenden Person (Kindes) zur gegenüberliegenden Beckenseite der Person verläuft. Ein solcher Gurt verhindert je nach seinem Verlauf die Benutzung eines solchen Nackenpolsters, da sich der Gurt durch unwillkürliche Bewegungen der Person im Schlaf mit der Nackenrolle verheddern kann.

Die Erfindung sieht daher vor, dass das Nackenpolster mit einer Aufnahme für den Schultergurt versehen ist. Dazu ist das eine Ende des Nackenpolsters verlängert und weist einen durchgehenden Kanal auf, durch den der Schultergurt hindurch geführt ist.

Zum Einlegen des Schultergurtes in den Kanal ist die obere Abdeckung des Kanals als Lasche ausgebildet, die lösbar mit der Basis des Kanals, z. B. über einen Klettverschluss verbunden ist.

Durch die Verbindung von Nackenpolster und Schultergurt wird dieser stets in einer optimalen Position in Bezug zum Körper der Person gehalten, so dass seine Schutzwirkung bei einem Unfall optimal zur Entfaltung kommt. Außerdem hält der Schultergurt das Nackenpolster in der als angenehm eingestellten Position in Bezug auf den Nacken der Person. Die Verlängerung des Nackenpolsters hat dabei gleichzeitig die Funktion eines Gurtschoners oder Gurtpolsters, so dass die bei einem Unfall vom Schultergurt auf den Körper wirkenden Kräfte verteilt und abgefedert werden.

Die dem Hals zugewandte Seite des Gurtschoners kann zusätzlich gepolstert sein, um insbesondere in einer Unfallsituation zu vermeiden, dass sich der Schultergurt in den Hals einschneidet.

Vorzugsweise befindet sich auf der Unterseite des Polsters, also auf der dem Körper zugewandten Seite eine Anti-Rutsch-Beschichtung, um das Nackenpolster auch bei angelegtem Gurt gut in Position bringen zu können. Die Anti-Rutsch-Beschichtung erlaubt es auch, dass sich das Nackenpolster entsprechend der Körperbewegung bzw. der Kopfbewegung relativ leicht verschieben kann.

Das Nackenpolster kann auch zweiteilig ausgeführt werden, wobei ein Teil als Gurtpolster am Gurt verbleibt und z. B. über einen Klettverschluss mit dem anderen Teil des Nackenpolsters verbunden wird. Um ein Verschieben des Gurtes im Gurtpolster zu vereinfachen, können in der Abdeckung des Gurtkanals Öffnungen vorgesehen werden.

Im Folgenden soll anhand eines Ausführungsbeispieles die Erfindung näher erläutert werden. Dazu zeigen:
- Fig. 1: eine sitzende Person mit einem angelegten Dreipunktgurt, an dem ein erfindungsgemäßes Nackenpolster befestigt ist,
- Fig.2a: eine Draufsicht auf ein erfindungsgemäßes, an einem Gurt befestigtes Nackenpolster und
- Fig.2b: einen Schnitt entlang der Linie II-II in Fig. 2a.

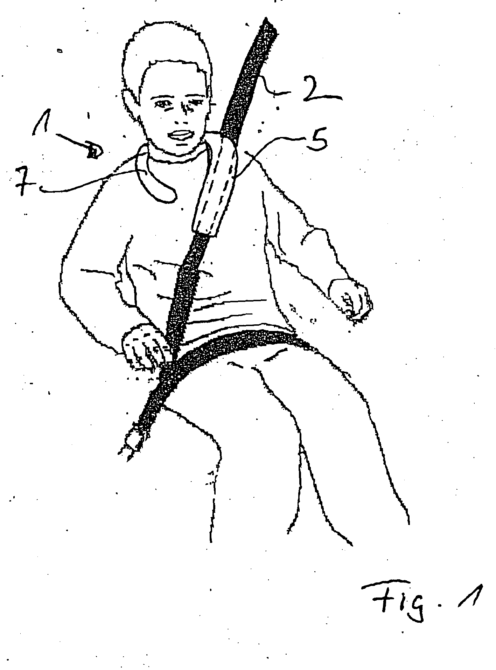

Figur 1 zeigt eine Person mit einem Nackenpolster 1, bestehend aus einer Nackenrolle 7 und einem Gurtpolster 5. Durch das Gurtpolster 5 verläuft der Schultergurt 2 eines Dreipunktgurtes über die Schulter der Person.

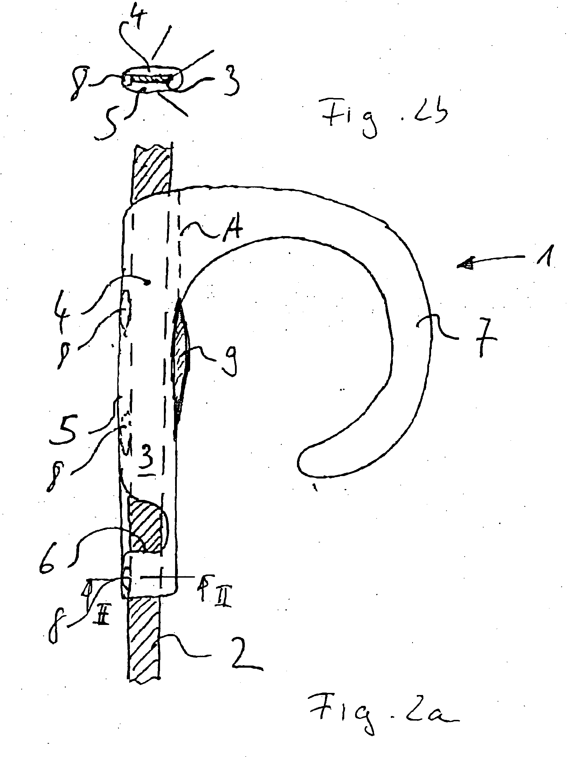

Die Figuren 2a und 2b geben eine Ausführung der Erfindung detaillierter wieder: Nackenrolle 7 und Gurtpolster 5 können als zwei getrennte Teile ausgeführt werden, die zur Benutzung an der Trennlinie A zusammengefügt werden. Der Gurt 2 verläuft dabei in einem Kanal 3 durch das Gürtpolster 5, wobei zum leichten Verschieben des Gurtes in der oberen Abdeckung des Gurtkanals 3 eine Öffnung 6 vorgesehen ist. Bei dieser Ausführung verbleibt das Gurtpolster 5 am Gurt. Die Nackenrolle 7 wird bei Bedarf mit dem Gurtpolster 5 verbunden, z. B. mit einem Klett- oder Reißverschluss.

Nackenrolle 7 und Gurtpolster 5 können auch einteilig ausgeführt werden. Um die Einheit bei Bedarf am Schultergurt 2 befestigen zu können, muss allerdings der Kanal 3 über die gesamte Länge für den Gurt 2 geöffnet werden können. Hierzu ist die obere Abdeckung des Kanals 3 als Lasche 4 ausgeführt, die mit der Basis des Kanals 3 lösbar, z. B. über punktuell angeordnete Klettverschlüsse 8, verbindbar ist. Die zum Hals der Person gerichtete Innenseite des Gurtpolsters kann mit einer gesonderten Polsterung 9 im Halsbereich versehen sein.

### Bezugszeichenliste

- 1: Nackenpolster
- 2: Schultergurt
- 3: Kanal
- 4: Lasche
- 5: Gurtpolster
- 6: Öffnung
- 7: Nackenrolle
- 8: Klettverschlüsse
- 9: Polsterung

## Patentansprüche

1. Nackenpolater mit einer Aufnahme für einen Schultergurt eines Dreipunktgurtes; wobei das eine Ende des Nackenpolsters (1) verlängert und einen durchgehenden Kanal (3) aufweist, durch den der schultergurt (2) hindurch geführt ist.

2. Nackenpolster nach Anspruch 1, **dadurch gekennzeichnet, dass** es aus einer Nackenrolle (7) und einem Gurtschoner besteht, die zu einem Nackenpolster (1) miteinander verbunden werden können.

3. Nackenpolster nach Anspruch 1, **dadurch gekennzeichnet, dass** die obere Abdeckung des Kanals (3) lösbar mit der Basis verbunden ist
